# FASCICULE DE BREVET EUROPEEN

(11) **EP 3 498 566 B1**
(45) Date de publication et mention de la délivrance du brevet: **04.03.2020**
(21) Numéro de dépôt: 18212637.5
(22) Date de dépôt: 14.12.2018
(51) Int. Cl.: B61F 1/08, B61D 13/00, B62D 25/00

(54) **VOITURE DE VÉHICULE FERROVIAIRE**
WAGEN EINES SCHIENENFAHRZEUGS
RAILWAY VEHICLE CAR

(30) Priorité: 15.12.2017 FR 1762246
(43) Date de publication de la demande: 19.06.2019
(73) Titulaire: ALSTOM Transport Technologies, 93400 Saint-Ouen (FR)
(72) Inventeur: GENDRON, Marc, 59226 LECELLES (FR); LALOYAUX, Laurent, 59296 AVESNES-LE-SEC (FR); SHARAWI, Alexandre, 59990 SEBOURG (FR); FLAMENT, Pascal, 59493 VILLENEUVE D'ASCQ (FR); DELANNOY, Nicolas, 59880 SAINT SAULVE (FR)
(74) Mandataire: Lavoix

(56) Documents cités:
- EP-A1- 0 241 116
- WO-A1-2017/017642
- US-A1- 2016 059 869
- US-B2- 9 592 839
- PHILIBERT D'HOTELANS ET AL: "Les tramways sur pneus Translohr par NewTransLohr", REVUE GÉNÉRALE DES CHEMINS DE FER : RCGF, no. 252, 1 septembre 2015 (2015-09-01), pages 24-35, XP055225788, FR ISSN: 0035-3183

## Description

La présente invention concerne une voiture de véhicule ferroviaire, du type comprenant un châssis et un bogie disposé en-dessous du châssis dans une direction verticale.

Une telle voiture de véhicule ferroviaire est par exemple connue du document EP 0 241 116 A1.

Une telle voiture connue ne donne toutefois pas entière satisfaction. En particulier, en cas d'incendie à proximité du bogie, le transfert thermique dans le châssis est élevé, ce qui peut constituer un défaut de sécurité pour des passagers se trouvant dans la voiture.

L'invention a notamment pour but de remédier à cet inconvénient, en limitant la température dans le plancher en cas d'incendie au niveau du bogie.

A cet effet, l'invention a pour objet une voiture de véhicule ferroviaire selon la revendication 1.

L'écran thermique étant disposé entre le châssis et le bogie, au-dessus du bogie dans une direction verticale. Il limite le transfert thermique par conduction dans le châssis. Ainsi, en cas d'incendie sur le bogie, l'augmentation de température dans le châssis est limitée.

Selon des modes de réalisation particuliers de l'invention, la voiture de véhicule ferroviaire présente en outre l'une ou plusieurs des caractéristiques suivantes, prise(s) isolément ou suivant toute(s) combinaison(s) techniquement possible(s) :
- la première partie est disposée en-dessous d'un siège de passager ;
- la deuxième partie est disposée à l'arrière d'un siège de passager ;
- l'écran comporte une première couche, une deuxième couche, et une troisième couche thermiquement isolante disposée entre les première et deuxième couches ; et
- la troisième couche est réalisée en graphite.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue en perspective, du dessous, d'une voiture de véhicule ferroviaire selon un exemple de mode de réalisation de l'invention ; et
- la Figure 2 est une vue détaillée de l'écran isolant selon l'invention isolant la voiture de la figure 1.

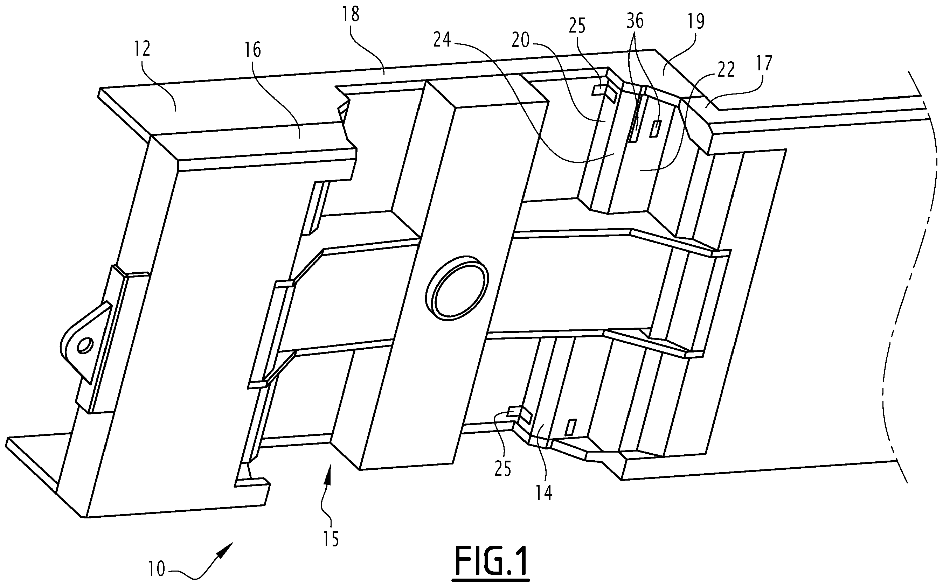

En référence à la Figure 1, la voiture 10 de véhicule ferroviaire comporte un châssis 12, et un bogie (non-représenté sur les Figures) disposé en-dessous du châssis 12 et portant ce châssis 12. Le bogie est relié au châssis 12 de manière connue en soi.

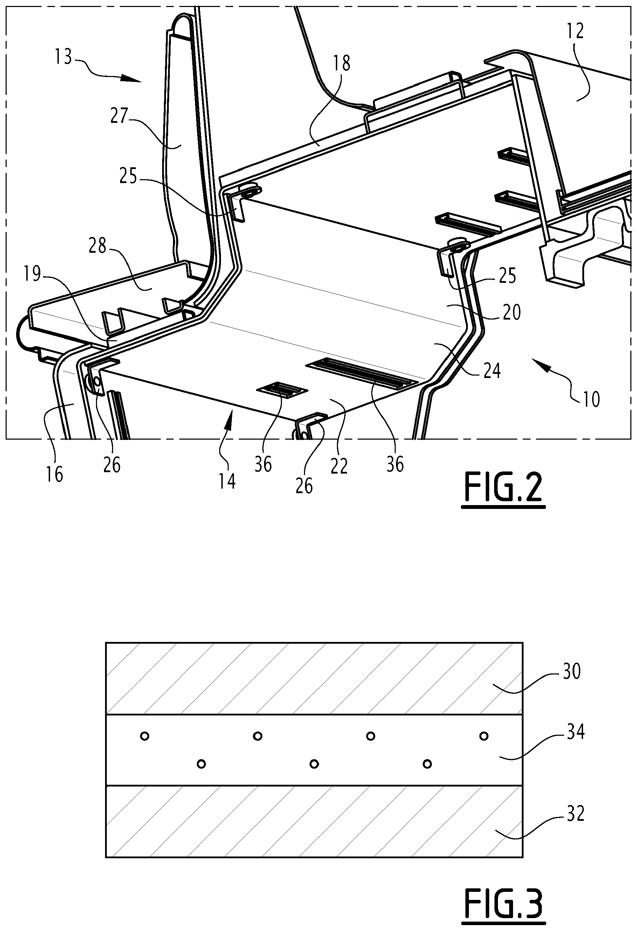

Le châssis 12 délimite une salle pour passagers, comprenant au moins un siège 13, représenté sur la Figure 2.

La voiture 10 selon l'invention comporte également un écran thermiquement isolant 14, agencé entre le châssis 12 et le bogie, dans un logement 15 recevant le bogie.

Le logement 15 est notamment délimité par des parois avant 16 et arrière 17, par au moins un panneau supérieur 18, et par des sections de coin 19 s'étendant chacune entre l'une des parois avant 16 ou arrière 17 et un panneau supérieur 18.

L'écran isolant 14 recouvre avantageusement l'une de ces sections de coin 19. Plus particulièrement, avantageusement, chaque section de coin 19 est recouverte d'un écran isolant 14 respectif.

Ainsi, chaque écran isolant 14 est disposé au-dessus du bogie dans une direction verticale. La direction verticale est définie par rapport à l'orientation classique d'un véhicule ferroviaire.

L'écran isolant 14 comporte une première partie 20 s'étendant sensiblement dans la direction verticale, une deuxième partie 22 s'étendant sensiblement dans une direction longitudinale perpendiculaire à la direction verticale, et une partie de raccord 24 qui raccorde les première 20 et deuxième 22 parties.

La première partie 20 est sensiblement plane et disposée directement au-dessus du bogie. Cette première partie 20 est raccordée au panneau supérieur 18 correspondant par des organes de liaison 25.

La partie de raccord 24 présente une forme sensiblement plane. Comme visible sur la Figure 2, la première partie 20 et la partie de raccord 24 forment ensemble un angle compris entre 0 et 90°, avantageusement compris entre 15° et 75°, et notamment un angle de 45°.

La deuxième partie 22 est sensiblement plane, et raccordée à une paroi avant 16 ou arrière 17 correspondante par des éléments de liaison 26.

La deuxième partie 22 et la partie de raccord 24 forment ensemble un angle compris entre 0 et 90°, avantageusement compris entre 15° et 75°, et notamment un angle de 45°.

En référence à la Figure 2, l'écran isolant 14 s'étend au moins en partie en dessous du siège 13 selon la direction verticale.

Le siège 13 comporte une partie verticale 27 formant dossier, et une partie horizontale 28 formant assise.

Comme visible sur la Figure 2, la première partie 20 de l'écran 14 est disposée en-dessous de la partie horizontale 28 du siège 13 selon la direction verticale. La deuxième partie 22 de l'écran 14 est disposée à l'arrière de la partie verticale 27. Ici, l'orientation avant et arrière est entendue relativement à une orientation classique d'un siège, vue par un passager assis sur le siège 13.

En référence à la Figure 3, l'écran 14 comporte au moins une première couche 30, une deuxième couche 32, et une troisième couche 34 disposée entre les première et deuxième couches 30, 32.

La troisième couche 34 est réalisée en un matériau thermiquement isolant, par exemple en graphite.

Dans le mode de réalisation préférée de l'invention, les première et deuxième couches 30, 32 sont réalisées en métal, par exemple en acier.

Dans une variante, l'écran 14 comporte des supports de fixation 36 pour câblage, adaptés pour recevoir des câbles.

Grâce à l'invention décrite ci-dessus, lors d'un incendie dans la partie de bogie, les risques que l'incendie pose aux passagers sont réduites. En effet, le transfert de la chaleur du bogie vers le passager est réduit grâce à la présence de l'écran isolant 14.

## Revendications

1. Voiture (10) de véhicule ferroviaire, comprenant un châssis (12) et un bogie disposé en-dessous du châssis (12) dans une direction verticale, la voiture (10) comportant un écran (14) thermiquement isolant, agencé entre le châssis (12) et le bogie, au-dessus du bogie dans la direction verticale,
**caractérisé en ce que** l'écran (14) comporte une première partie (20), une deuxième partie (22) sensiblement perpendiculaire à la première partie (20) disposée à l'écart de la première partie (22), et une partie de raccord (24) sensiblement droite raccordant les première (20) et deuxième parties (22).

2. Voiture (10) de véhicule ferroviaire selon la revendication 1, dans laquelle la première partie (20) est disposée en-dessous d'un siège (13) de passager.

3. Voiture (10) de véhicule ferroviaire selon la revendication 1 ou 2, dans laquelle la deuxième partie (22) est disposée à l'arrière d'un siège (13) de passager.

4. Voiture (10) de véhicule ferroviaire selon l'une quelconque des revendications 1 à 3, dans laquelle l'écran (14) comporte une première couche (30), une deuxième couche (32), et une troisième couche (32) thermiquement isolante disposée entre les première (30) et deuxième couches (32).

5. Voiture (10) de véhicule ferroviaire selon la revendication 4, dans laquelle la troisième couche (34) est réalisée en graphite.

## Patentansprüche

1. Wagen (10) eines Schienenfahrzeugs, der ein Chassis (12) und ein in vertikaler Richtung unterhalb des Chassis (12) angeordnetes Drehgestell umfasst, wobei der Wagen (10) einen thermisch isolierenden Schirm (14) aufweist, der zwischen dem Chassis (12) und dem Drehgestell in einer vertikalen Richtung über dem Drehgestell angeordnet ist,
**dadurch gekennzeichnet, dass** der Schirm (14) ein erstes Teil (20), ein im Wesentlichen senkrecht zum ersten Teil (20) liegendes zweites Teil (22), das mit Abstand zum ersten Teil (22) angeordnet ist, und ein im Wesentlichen gerades Verbindungteil (24), das das erste (20) und das zweite (22) Teil verbindet, aufweist.

2. Wagen (10) eines Schienenfahrzeugs nach Anspruch 1, bei dem das erste Teil (20) unter einem Sitz (13) für Passagiere angeordnet ist.

3. Wagen (10) eines Schienenfahrzeugs nach Anspruch 1 oder 2, bei dem das zweite Teil (22) hinter einem Sitz (13) für Passagiere angeordnet ist.

4. Wagen (10) eines Schienenfahrzeugs nach einem beliebigen der Ansprüche 1 bis 3, bei dem der Schirm (14) eine erste Schicht (30), eine zweite Schicht (32) und eine dritte, thermisch isolierende Schicht (32), die zwischen der ersten (30) und der zweiten Schicht (32) angeordnet ist, aufweist.

5. Wagen (10) eines Schienenfahrzeugs nach Anspruch 4, bei dem die dritte Schicht (34) aus Graphit hergestellt ist.

## Claims

1. A railway vehicle coach (10) comprising a chassis (12) and a bogie arranged below the chassis (12) in a vertical direction, the coach (10) including a thermally insulating screen (14), arranged between the chassis (12) and the bogie, above the bogie in the vertical direction,
**characterized in that** the screen (14) comprises a first part (20), a second part (22) substantially perpendicular to the first part (20) and arranged away from the first part (22), and a substantially straight connecting part (24) connecting the first (20) and second (22) parts.

2. The railway vehicle coach (10) according to claim 1, wherein the first part (20) is arranged below a passenger seat (13).

3. The railway vehicle coach (10) according to claim 1 or 2, wherein the second part (22) is arranged behind a passenger seat (13).

4. The railway vehicle coach (10) according to any one of claims 1 to 3, wherein the screen (14) includes a first layer (30), a second layer (32), and a third thermally insulating layer (32) arranged between the first (30) and second (32) layers.

5. The railway vehicle coach (10) according to claim 4, wherein the third layer (34) is made from graphite.
